# EUROPÄISCHE PATENTANMELDUNG

(11) **EP 3 965 069 A1**
(43) Veröffentlichungstag der Anmeldung: **09.03.2022**
(21) Anmeldenummer: 21192280.2
(22) Anmeldetag: 20.08.2021
(51) Int. Cl.: G06V 20/52, G07C 9/25, G07C 9/37

(54) **ANORDNUNG UND VERFAHREN ZUR OPTISCHEN ERFASSUNG EINER ZU ÜBERPRÜFENDEN PERSON**

(30) Priorität: 03.09.2020 DE 102020201230
(71) Anmelder: Bundesdruckerei GmbH, 10969 Berlin (DE)
(72) Erfinder: Dr. Schnjakin, Maxim, 10245 Berlin (DE); Dr. Wolf, Andreas, 13158 Berlin (DE)
(74) Vertreter: Hentrich Patent- & Rechtsanwälte PartG mbB

(57) **Zusammenfassung**

Die Erfindung betrifft eine Anordnung (100) zur optischen Erfassung einer zu überprüfenden Person (200) an einer Kontrollstation (104), mit einer der Kontrollstation (104) zugeordneten, Kamera (102), mit einer der Kontrollstation (104) zugeordneten Prozessoreinheit (106), die ausgebildet ist, mit der der Kontrollstation (104) zugeordneten Kamera (102) über eine Kommunikationsverbindung zu kommunizieren, wobei die Prozessoreinheit (106) eine Auswerteeinheit (108) aufweist, welche ausgebildet ist, Daten, die mittels der der Kontrollstation (104) zugeordneten Kamera (102) von der zu überprüfenden Person (200) erfasst werden, weiterzuverarbeiten und anschließend ein sich daraus ergebendes Verarbeitungsergebnis an eine Ausgabeeinheit (110) zu übermitteln, welche hierzu ausgebildet ist, mit der Prozessoreinheit (106) ebenfalls über eine Kommunikationsverbindung zu kommunizieren. Die Prozessoreinheit (106) ist ausgebildet, eine Kommunikationsverbindung mit einem mobilen Endgerät (112) aufzubauen und Daten, die von einer Kamera (116) des mobilen Endgeräts (112) von der zu überprüfenden Person (200) erfasst werden, der Auswerteeinheit (108) zuzuführen, die ausgebildet ist, auch die von der Kamera (116) des mobilen Endgeräts (112) erfassten Daten in die Weiterverarbeitung und damit in das Verarbeitungsergebnis einzubeziehen, bevor es an die Ausgabeeinheit (110) übermittelt und von der Ausgabeeinheit (110) ausgegeben wird.. Die Erfindung betrifft außerdem ein Verfahren zum optischen Erfassen eines Objekts und/oder einer zu überprüfenden Person. Die Erfindung betrifft außerdem ein Verfahren zur optischen Erfassung einer zu überprüfenden Person (200).

## Beschreibung

Die Erfindung betrifft eine Anordnung zur optischen Erfassung einer zu überprüfenden Person an einer Kontrollstation, mit einer der Kontrollstation zugeordneten, insbesondere fest installierten, Kamera. Der Kontrollstation ist ferner eine Prozessoreinheit zugeordnet, die ausgebildet ist, mit der der Kontrollstation zugeordneten Kamera über eine Kommunikationsverbindung zu kommunizieren, wobei die Prozessoreinheit eine Auswerteeinheit aufweist, welche ausgebildet ist, Daten, die mittels der der Kontrollstation zugeordneten Kamera von der zu überprüfenden Person erfasst werden, weiterzuverarbeiten und anschließend ein sich daraus ergebendes Verarbeitungsergebnis an eine Ausgabeeinheit zu übermitteln, welche ihrerseits dazu ausgebildet ist, mit der Prozessoreinheit über eine Kommunikationsverbindung zu kommunizieren. Die Erfindung betrifft außerdem ein Verfahren zur optischen Erfassung einer zu überprüfenden Person an einer Kontrollstation.

Derartige Anordnungen sind aus dem Stand der Technik bekannt und werden meist als Zutrittskontrollsystem in einem Außenbereich eingesetzt. Aufgrund der unterschiedlichen Umgebungsbedingungen ist die Datenqualität teilweise eingeschränkt, insbesondere in solchen Situationen, in denen die Sonne zu stark scheint und dadurch zu einer Überbelichtung führt oder in Situationen, in denen der Lichteinfall auf die zu überprüfende Person ungünstig ist und unerwünschte Schatten hervorruft. Aus diesem Grund besteht das Bedürfnis, mehrere Kameras für die optische Erfassung einer zu überprüfenden Person, insbesondere zur optischen Erfassung eines Gesichtsbilds der Person, zu verwenden, wobei aufgrund der örtlichen Gegebenheiten nicht immer Platz für weitere fest installierte Kameras vorliegt. Außerdem kann es vorkommen, dass sich in einem Zugangskontrollbereich oder in einer Kontrollzone mehrere Personen befinden, sodass auch dadurch die optische Erfassung und die Identifizierung einer einzelnen zu überprüfenden Person in der Menschenmenge erschwert ist, beispielsweise wenn die zu überprüfende Person von einer anderen Person in der Menschenmenge innerhalb der Kontrollzone (teilweise) verdeckt wird.

Es ist daher die Aufgabe der vorliegenden Erfindung, eine Anordnung und ein Verfahren zur optischen Erfassung einer zu überprüfenden Person derart weiterzubilden, die eine zuverlässige optische Erfassung bei den unterschiedlichsten Umgebungsbedingungen bieten.

Diese Aufgabe wird durch eine Anordnung mit den Merkmalen des Anspruchs 1 und durch ein Verfahren mit den Merkmalen des Anspruchs 6 gelöst. Vorteilhafte Ausgestaltungen mit zweckmäßigen Weiterbildungen sind in den abhängigen Ansprüchen angegeben.

Die Anordnung zur optischen Erfassung einer zu überprüfenden Person, insbesondere zur optischen Erfassung des Gesichts der zu überprüfenden Person, zeichnet sich dadurch aus, dass die Prozessoreinheit ausgebildet ist, eine Kommunikationsverbindung mit einem mobilen Endgerät aufzubauen und Daten, die von einer Kamera des mobilen Endgeräts von der zu überprüfenden Person erfasst werden, der Auswerteeinheit zuzuführen, die ausgebildet ist, auch die von der Kamera des mobilen Endgeräts erfassten Daten in die Weiterverarbeitung und damit in das Verarbeitungsergebnis einzubeziehen, bevor es an die Ausgabeeinheit übermittelt und von der Ausgabeeinheit ausgegeben wird.

Damit ist der Vorteil verbunden, dass eine weitere Kamera eines mobilen Endgeräts dazu genutzt wird, um die optischen Erfassung der zu überprüfenden Person durchzuführen, die typischerweise dann aus einem weiteren Blickwinkel gegenüber der der Kontrollstation zugeordneten Kamera erfolgt. Auf diese Weise kann die zu überprüfende Person sich zunächst geeignet "ins Licht" stellen, eine oder mehrere Aufnahmen, beispielsweise des Gesichts, erfassen und der Kontrollstation, insbesondere der Prozessoreinheit über eine geeignete Schnittstelle zur Verfügung stellen. Über diese Schnittstelle können diese Daten dann von der Auswerteeinheit - zusammen mit den Daten der der Kontrollstation zugeordneten Kamera - weiterverarbeitet werden, womit für die Überprüfung der zu überprüfenden Person eine verbesserte Datenlage vorliegt und deshalb zu einem präziseren Kontrollergebnis führt.

Als mobiles Endgerät kommt typischerweise ein Smartphone in Betracht, das von der zu überprüfenden Person oder von einer weiteren Person mitgeführt wird. Ein Smartphone verfügt typischerweise über geeignete Kommunikationsschnittstellen und ermöglicht damit einen zuverlässigen Datenaustausch zwischen dem mobilen Endgerät und der Prozessoreinheit. Die Datenübertragung erfolgt dabei vorzugsweise drahtlos, kann aber auch drahtgebunden erfolgen.

Es ist in diesem Zuge von Vorteil, wenn die Prozessoreinheit ausgebildet ist, eine Kommunikationsverbindung mit wenigstens einem zweiten mobilen Endgerät aufzubauen und Daten, die von einer Kamera des zweiten mobilen Endgeräts von der zu überprüfenden Person erfasst werden, der Auswerteeinheit ebenfalls zuzuführen, die ihrerseits ausgebildet ist, auch die von der Kamera des zweiten mobilen Endgeräts erfassten Daten in die Weiterverarbeitung und damit in das Verarbeitungsergebnis einzubeziehen, bevor es an die Ausgabeeinheit übermittelt und von der Ausgabeeinheit ausgegeben wird. Auf diese Weise ist es also möglich, dass insgesamt wenigstens drei Kameras zur optischen Erfassung der zu überprüfenden Person, insbesondere zur optischen Erfassung des Gesichts der zu überprüfenden Person, genutzt werden können und somit die Daten von wenigstens drei Kameras bei der Weiterverarbeitung durch die Auswerteeinheit berücksichtigt werden. Dies dient ebenfalls einer verbesserten Datenlage, die zu einem verbesserten Prüfergebnis führt.

Eine Ausgestaltung mit wenigstens drei Kameras berücksichtigt zum Beispiel auch den Fall, in welchem Personen mit ihren Smartphones ohnehin sehr viele Fotos einer Szene, insbesondere in einer Kontrollzone, erstellen, sodass eine sich auf dem Bild befindliche zu überprüfende Person aus einer Mehrzahl von Personen identifiziert und somit bei der Auswertung und Weiterverarbeitung durch die Auswerteeinheit überprüft werden kann. Selbstverständlich kann auch eine Serie von Bildern bei der Auswertung herangezogen werden oder vorliegen, so dass die Möglichkeit besteht, dass der Prozessoreinheit der Kontrollstation ein "Stream" oder ein Film ausgehend vom mobilen Endgerät übermittelt wird, womit eine noch präzisere optische Erfassung der zu überprüfenden Person gegeben ist.

Es hat sich als vorteilhaft erwiesen, wenn das mobile Endgerät wenigstens einen Sensor zur Lagebestimmung der Kamera umfasst, und wenn die Prozessoreinheit ausgebildet ist, auch die Daten der Lage der Kamera der Auswerteeinheit zuzuführen, welche ihrerseits ausgebildet ist, die Lage der Kamera in die Weiterverarbeitung und damit in das Verarbeitungsergebnis einzubeziehen, bevor es an die Ausgabeeinheit übermittelt und von der Ausgabeeinheit ausgegeben wird. Auf diese Weise kann ein Abgleich mit weiteren Informationen aus den der Prozessoreinheit zugeführten Bilddaten erfolgen. Dieser Abgleich kann eine Konsistenzprüfung dahingehend umfassen, ob der Lichteinfall, ob die Blickrichtung, ob die Position oder andere Informationen in den aus unterschiedlichen Richtungen aufgezeichneten Bildern in sich konsistent und damit plausibel sind. Sollte eine solche Plausibilitätsprüfung negativ ausfallen, so wäre auf einen Täuschungsversuch zu schließen.

Es hat sich als vorteilhaft erwiesen, wenn aus den Bildern, insbesondere aus den Gesichtsbildern, biometrische Daten extrahiert oder ausgelesen werden, und wenn diese Daten mit Referenzdaten, welche beispielsweise ebenfalls optisch mit einer der Kameras eingelesen wurden, verglichen werden. Werden Abweichungen in wenigstens einem biometrischen Merkmal festgestellt, so wäre ebenfalls auf einen Täuschungsversuch zu schließen.

Eine ergänzende - nicht optische - biometrische Überprüfung der Fingerabdrücke trägt ebenfalls zur Identifikation einer zu überprüfenden Person bei, wobei es von Vorteil ist, wenn das mobile Endgerät wenigstens einen Fingerabdrucksensor zur Erfassung von wenigstens einem der Fingerabdrücke der zu überprüfenden Person umfasst. In diesem Fall ist die Prozessoreinheit ausgebildet, auch die Fingerabdruckdaten der Auswerteeinheit zuzuführen, welche ihrerseits ausgebildet ist, die Fingerabdrücke der zu überprüfenden Person in die Weiterverarbeitung und damit in das Verarbeitungsergebnis einzubeziehen, bevor es an die Ausgabeeinheit übermittelt und von der Ausgabeeinheit ausgegeben wird.

Für die Identifizierung oder für die Zugangskontrolle von einer zu überprüfenden Person ist es von Vorteil, wenn die Prozessoreinheit über Zugriff auf einen eine Datenbank umfassenden Speicher verfügt, und wenn die Auswerteeinheit ausgebildet ist, die erfassten Daten mit in der Datenbank gespeicherten Referenzdaten zu vergleichen und das Vergleichsergebnis als Verarbeitungsergebnis an die Ausgabeeinheit zu übermitteln. Über die Ausgabeeinheit kann beispielsweise ein optisches oder akustisches Signal oder eine Information ausgegeben werden, ob es sich bei der zu überprüfenden Person um diejenige Person handelt, die das Kontrollsystem erwartet oder etwa nicht erwartet.

Das Verfahren zur optischen Erfassung einer zu überprüfenden Person an einer Kontrollstation mit einer vorstehend erwähnten Anordnung umfasst insbesondere die folgenden Schritte:
- optisches Erfassen der zu überprüfenden Person, insbesondere des Gesichts der zu überprüfenden Person, mittels einer der Kontrollstation zugeordneten, insbesondere fest installierten, Kamera,
- optisches Erfassen der zu überprüfenden Person, insbesondere deren Gesichts, mittels einer Kamera eines mobilen Endgeräts,
- Übertragen der Daten, die mittels der der Kontrollstation zugeordneten Kamera und mittels der Kamera des mobilen Endgeräts erfasst wurden, an eine der Kontrollstation zugeordnete Prozessoreinheit,
- Weiterverarbeiten der erfassten Daten durch eine Auswerteeinheit der Prozessoreinheit zu einem Verarbeitungsergebnis, und
- Übertragen des Verarbeitungsergebnisses an eine in Kommunikationsverbindung mit der Prozessoreinheit stehende Ausgabeeinheit, durch welche das Verarbeitungsergebnis ausgegeben wird.

Auf diese Weise kann also eine Zutrittskontrolle mit einer der Kontrollstation zugeordneten Kamera erfolgen, wobei die Bilder der Kamera der Zugriffskontrolle ergänzt werden durch die Bilder eines mobilen Endgeräts, insbesondere einer Smartphone-Kamera eines Smartphones der zu überprüfenden Person. Die zu überprüfende Person tritt in dieser Situation an die Zugriffskontrolle heran und blickt in die Kamera eines mobilen Endgeräts, wobei die Ausrichtung derart optimiert wird, dass ein Lichteinfall der Sonne bei der optischen Erfassung möglichst wenig stört. Der erfasste Videostrom wird dann an die Prozessoreinheit der Kontrollstation übertragen und wird einer Auswerteeinheit zugeführt. Diese führt eine Überprüfung der zu überprüfenden Person anhand der Daten des mobilen Endgeräts und anhand der Daten der der Kontrollstation zugeordneten Kamera durch, wobei das Verarbeitungsergebnis aller Daten mit der Ausgabeeinheit ausgegeben wird.

Es besteht auch die Möglichkeit, eine Gruppen-Zutrittskontrolle, beispielsweise vor einem Fußballstadion, durchzuführen, wobei mehrere Mitglieder der Gruppe über ein eigenes mobiles Endgerät, insbesondere über ein Smartphone, verfügen. In diesem Zuge ist es von Vorteil, wenn die zu überprüfende Person zusätzlich mit einer Kamera von wenigstens einem zweiten mobilen Endgerät optisch erfasst wird, und wenn die Daten der Kamera des zweiten mobilen Endgeräts ebenfalls an die Prozessoreinheit übertragen, durch die Auswerteeinheit weiterverarbeitet und damit im Verarbeitungsergebnis berücksichtigt werden.

Der Vorteil in dieser Ausgestaltung besteht darin, dass die Überprüfung verbessert wird, weil aufgrund des Einsatzes von vielen Kameras mehr Bilddaten zu einer zu überprüfenden Person vorliegen. Außerdem kann auf diese Weise eine Vielzahl von Personen gleichzeitig überprüft werden, weil sich auf den einzelnen optisch erfassten Bildern der mobilen Endgeräte zumeist mehr als eine Person befindet.

Aus diesem Grund können auch insgesamt weniger Bilder ausreichen als mobile Endgeräte vorhanden sind, um eine gute Überprüfung einer Mehrzahl von zu überprüfenden Personen durchzuführen. Vorzugsweise werden dabei die Gesichter der Gruppenmitglieder erfasst und mit Referenzdaten verglichen.

Es ist von Vorteil, wenn die gegenseitige Lage der Kameras anhand der Daten eines GPS-Sensors des mobilen Endgeräts bestimmt und anschließend einer Plausibilitätsprüfung unterzogen wird. Auf diese Weise lässt sich ein zeitlicher und räumlicher Zusammenhang, insbesondere auch aus dem Zeitstempel der von den Kameras erzeugten Einzelbilder herstellen. Sollten sich hierbei Abweichungen ergeben, so fällt die Plausibilitätsprüfung negativ aus und lässt auf einen Täuschungsversuch an der Kontrollstation schließen.

Bei der Aufzeichnung von Gruppen, hat es sich als vorteilhaft erwiesen, wenn eine einzelne zu überprüfende Person in einer Menge von mehreren Personen auf den Bildern identifiziert wird. Anhand der von den einzelnen mobilen Endgeräten übermittelten Daten, kann eine Standortprüfung der zu überprüfenden Person auf den mehreren Bildern durchgeführt und dieser ebenfalls einer Plausibilitätsprüfung unterzogen werden. Ferner kann eine Lichteinfallsprüfung des Lichteinfalls der zu überprüfenden Person durchgeführt und auf eine vorliegende Plausibilität geprüft werden. Zusätzlich kann die Ausrichtung, insbesondere die Ausrichtung des Kopfes, der zu überprüfenden Person auf einer Mehrzahl von Bildern erfasst werden, wobei eine vorgegebene Pose als "Normgröße" bei der Überprüfung herangezogen wird.

Für die Plausibilitätsprüfung oder bei einer Zutrittskontrolle hat es sich als sinnvoll erwiesen, wenn die von der Prozessoreinheit empfangenen Daten mittels der Auswerteeinheit mit Referenzdaten verglichen werden, die in einer in einem Speicher hinterlegten Datenbank gespeichert sind, und wenn das Vergleichsergebnis als Verarbeitungsergebnis an die Ausgabeeinheit übermittelt wird.

Dabei können auch die an den mobilen Endgeräten vorhandenen Fingerabdrucksensoren dazu genutzt werden, um eine weitergehende biometrische Erfassung der Fingerabdruckdaten der zu überprüfenden Person durchzuführen, wobei der mindestens eine erfasste Fingerabdruck mit in einer Datenbank der Prozessoreinheit hinterlegten Fingerabdrücken abgeglichen wird, welche in Korrelation zu weiteren personenbezogenen Daten stehen. Bei Übereinstimmung des erfassten Fingerabdrucks mit einem der in der Datenbank hinterlegten Fingerabdrücke, können die zugehörigen personenbezogenen Daten an der Ausgabeeinheit ebenfalls ausgegeben werden.

Die Mehrzahl an optisch erfassten Bildern der zu überprüfenden Person, insbesondere des Gesichts der zu überprüfenden Person, ermöglicht es zudem, dass anhand der Daten der der Kontrollstation zugeordneten Kamera und anhand der Daten der Kamera des mobilen Endgeräts ein dreidimensionales Gesichtsbild der zu überprüfenden Person erstellt und einer weitergehenden Überprüfung unterzogen wird. Die weitergehende Überprüfung kann beispielsweise ein Abgleich mit den Daten in der Datenbank sein. Auf diese Weise kann eine PAD ("presentation attack detection") durchgeführt werden, da nun geprüft werden kann, ob es sich bei dem Bild um einen dreidimensionalen Kopf einer zu überprüfenden Person handelt und nicht lediglich um eine Fotografie oder ein Abbild. Auch hierbei lassen sich die zeitlichen und/oder örtlichen Zusammenhänge auf Plausibilität überprüfen.

Hinsichtlich der Ausgestaltungen des Verfahrens ist die genutzte Reihenfolge der genannten Verfahrensschritte zwar zweckmäßig, aber nicht zwingend. Beispielsweise kann zuerst die Kamera des mobilen Endgeräts zur Erfassung der zu überprüfenden Person oder deren Gesichts genutzt werden, bevor die Kamera der Kontrollstation zum Einsatz kommt und umgekehrt.

Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in der Figur nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnung. Dabei zeigt:

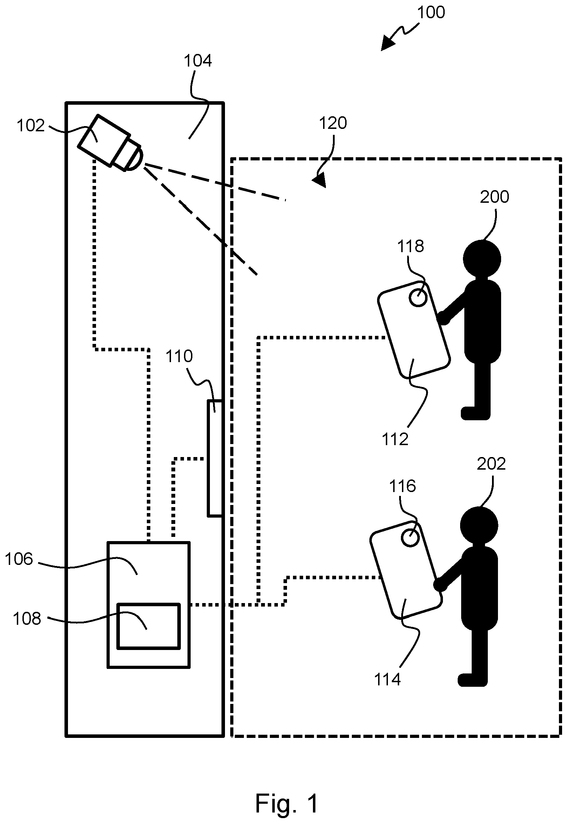

Fig. 1 eine schematische Darstellung einer Anordnung zur optischen Erfassung einer zu überprüfenden Person.

In Figur 1 ist eine Anordnung 100 zur optischen Erfassung einer zu überprüfenden Person 200, insbesondere zur optischen Erfassung des Gesichts der zu überprüfenden Person 200, an einer Kontrollstation 104 gezeigt. Die Kontrollstation 104 umfasst eine vorliegend fest installierte Kamera 102, die beispielsweise auch als eine Nah-Infrarotkamera (NIR-Kamera) ausgebildet sein kann. Vorzugsweise ist die Kamera 102 als eine konventionelle VIS-Kamera gebildet. Die Kontrollstation 104 umfasst eine Prozessoreinheit 106, die ausgebildet ist, mit der der Kontrollstation 104 zugeordneten Kamera 102 über eine Kommunikationsverbindung zu kommunizieren, wobei die Prozessoreinheit 106 ferner eine Auswerteeinheit 108 umfasst. Außerdem ist eine Ausgabeeinheit 110 vorhanden, die ebenfalls in einer Kommunikationsverbindung mit der Prozessoreinheit 106 steht. Die Prozessoreinheit 106 ist ausgebildet, eine Kommunikationsverbindung mit wenigstens einem mobilen Endgerät 112 aufzubauen, welches vorzugsweise das Smartphone der zu überprüfenden Person 200 ist. Vorzugsweise wird diese Kommunikationsverbindung automatisiert aufgebaut, wenn sich die zu überprüfende Person 200 in einer Kontrollzone 102 oder einem Kontrollbereich der Kontrollstation 104 befindet. Die Anordnung 100 ist vorliegend außerdem derart ausgebildet, dass die Prozessoreinheit 106 auch eine Kommunikationsverbindung mit wenigstens einem zweiten mobilen Endgerät 114 aufbauen kann, wobei jedes der mobilen Endgeräte 112, 114 eine eigene Kamera 116,118 umfasst.

Die Kommunikationsverbindungen sind vorzugsweise drahtlos gebildet, beispielsweise durch eine Funkverbindung mittels Bluetooth (Standard gemäß I112 802.15.1) oder mittels WLAN (engl. "wireless local area network"; Standard gemäß I112 802.11, I112 802.11a, I112 802.11b, I112 802.11h, I112 802.11g, I112 802.11n, I112 802.11ac oder I112 802.11ad). Auch drahtlose Kommunikationsverbindungen mittels RFID (engl. "radio-frequency identification"), insbesondere mittels NFC (engl. "near field communication"), können bei der vorliegenden Anordnung 100 verwendet sein.

Es besteht alternativ oder ergänzend auch die Möglichkeit, dass in der Kontrollzone 120 eine (nicht näher gezeigte) Lade- und Datenübertragungssäule vorliegt, die eine Mehrzahl an Steckern umfasst, die in einem Steckplatz an den mobilen Endgeräten 112, 114 eingesteckt werden können, wodurch eine drahtgebundene Verbindung zwischen den mobilen Endgeräten 114, 116 und der Prozessoreinheit 106 aufgebaut wird. Diese Stecker können die mobile Endgeräte 114, 116 dann auch zusätzlich mit Strom versorgen, insbesondere dann, wenn das mobile Endgerät 114, 116 bzw. das Smartphone einen kritischen Akkuladestand unterschritten hat, der eine optische Erfassung mittels des mobilen Endgeräts 114, 116 unmöglich machen würde.

Die Prozessoreinheit 106 ist ihrerseits ebenfalls mit einer Spannungs- und Stromversorgung verbunden. Sie kann an das normale Stromnetz angeschlossen oder beispielsweise mit einem nicht näher dargestellten elektrischen Speicher, insbesondere mit einem Akkumulator, beispielsweise einem Lithiumionen-Akkumulator, elektrisch verbunden sein.

Die Auswerteeinheit 108 ist ausgebildet, die Daten, die mittels der der Kontrollstation 104 zugeordneten Kamera 102 von der zu überprüfenden Person 200 sowie mittels der Kameras 116,118 der mobilen Endgeräte 112,114 erfasst wurden, weiterzuverarbeiten und damit ein Verarbeitungsergebnis an die Ausgabeeinheit 110 zu übermitteln. Die Ausgabeeinheit 110 zeigt dann an, ob einer zu überprüfenden Person 200 oder ggfs. auch einer weiteren Person 202 Zutritt gewährt werden sollte oder nicht.

Bei der Zutrittskontrolle wird die zu überprüfende Person 200 zunächst mittels der der Kontrollstation 104 zugeordneten Kamera 102 optisch erfasst. Anschließend wird die zu überprüfende Person 200 mittels der Kamera 116 des mobilen Endgeräts 112 und/oder mittels der Kamera 118 des zweiten mobilen Endgeräts 114 optisch erfasst. Anschließend werden die Daten, die mittels der der Kontrollstation 104 zugeordneten Kamera 102 sowie der mittels der Kamera 116 des mobilen Endgeräts 112 und/oder mittels der Kamera 118 des zweiten mobilen Endgeräts 114 erfasst wurden, an die der Kontrollstation 104 zugeordnete Prozessoreinheit 106 übertragen. Die Daten werden dann von der Prozessoreinheit 106 an die Auswerteeinheit 108 übergeben, die die erfassten Daten zu einem Verarbeitungsergebnis weiterverarbeitet. Das Verarbeitungsergebnis wird anschließend an die in Kommunikationsverbindung mit der Prozessoreinheit 106 stehende Ausgabeeinheit 110 übertragen, die das Verarbeitungsergebnis ausgibt.

Vorzugsweise wird bei der optischen Erfassung jeweils das Gesicht der zu überprüfenden Person 200 erfasst, sodass eine biometrische Prüfung erfolgen kann. Mithilfe von GPS-Sensoren der mobilen Endgeräte 112,114 können die Lage der mobilen Endgeräte 112, 114 oder die Lage der zu überprüfenden Person 200 festgestellt werden, welche im Rahmen einer Plausibilitätsprüfung mit den Daten der fest installierten Kamera 102 abgeglichen werden können. Eine solche Plausibilitätsprüfung kann auch eine Standortprüfung der zu überprüfenden Person 200 auf den aus unterschiedlichen Richtungen erfassten Bildern umfassen. Ferner kann eine Lichteinfallsprüfung des Lichteinfalls auf die zu überprüfende Person 200 erfolgen. Ferner können zeitliche und/oder räumliche Zusammenhänge aus den Bilddaten extrahiert werden. Typischerweise sind die dabei übertragenen Bilddaten an die Prozessoreinheit 106 mit einem Zeitstempel versehen, der in die Überprüfung durch die Auswerteeinheit 108 einbezogen werden kann.

Bei der Überprüfung ist es von Vorteil, dass die von der Prozessoreinheit 106 empfangenen Daten mittels der Auswerteeinheit 108 mit Referenzdaten verglichen werden, die in einer in einem Speicher hinterlegten Datenbank gespeichert sind, und dass das Vergleichsergebnis als Verarbeitungsergebnis dann an die Ausgabeeinheit 110 übermittelt wird. Die Referenzdaten können beispielsweise die optisch erfassten Daten eines Ausweis-, Wert oder Sicherheitsdokuments sein.

Um eine ergänzende biometrische Prüfung der Fingerabdrücke durchzuführen, umfassen die mobilen Endgeräte 112,114 außerdem einen Fingerabdrucksensor, wobei wenigstens einer der Fingerabdrücke der zu überprüfenden Person 200 erfasst werden kann. Die Prozessoreinheit 106 ist somit ferner ausgebildet, auch die Fingerabdruckdaten der Auswerteeinheit 108 zuzuführen, welche ihrerseits ausgebildet ist, die Fingerabdrücke der zu überprüfenden Person 200 in die Weiterverarbeitung und damit in das Verarbeitungsergebnis einzubeziehen, bevor es an die Ausgabeeinheit 110 übermittelt und von der Ausgabeeinheit 110 ausgegeben wird.

Mit der Anordnung 100 lassen sich zwei unterschiedliche Zutrittskontrollen realisieren. In einem ersten Beispiel erfolgt die Zutrittskontrolle einer einzelnen Person. In einem zweiten Beispiel folgt die Zutrittskontrolle für eine Gruppe, also von mehreren zu überprüfenden Personen gleichzeitig.

Im ersten Beispielsfall wird die Kamera 102 "unterstützt" durch die Kamera 116 des Smartphones der zu überprüfenden Person 200. Die zu überprüfende Person 200 betritt hierzu die Kontrollzone 120 und blickt in ihre Kamera 116 des mobilen Endgeräts 114. Dabei wird die (Blick-)Richtung derart optimiert, dass die Sonne und somit der Lichteinfall möglichst wenig stören. Der durch das mobile Endgerät 112 erfasste Videostrom wird an die Prozessoreinheit 106 übertragen, wobei in der Auswerteeinheit 110 geprüft wird, ob die empfangenen Daten konsistent mit den durch die Kamera 102 erfassten Daten sind; insbesondere im Hinblick auf die Anordnung von einzelnen Objekten in den Bildern, von (Aus-)Richtungen oder im Hinblick auf eine Lichtorientierung. Vorzugsweise werden die dabei erhaltenen Gesichtsbilddaten extrahiert und in einem Gesichtsmodell zusammengefasst, wobei vorzugsweise ein dreidimensionales Gesichtsmodell erstellt wird, um zugleich eine PAD ("presentation attack detection") durchführen zu können. Das Gesichtsmodell kann dann verglichen werden mit den in der Datenbank hinterlegten Referenzdaten.

Für den zweiten Beispielsfall einer Gruppen-Zutrittskontrolle ist eine Mehrzahl an zu überprüfenden Personen 200, beispielsweise zehn Personen, in der Kontrollzone 102 vorhanden. Es liegt damit auch eine Mehrzahl an mobilen Endgeräten 112, 114 mit Kameras 116, 118 vor. Jedenfalls liegen wenigstens zwei mobile Endgeräte 112,114 vor. Eine größere Personenanzahl und eine größere Anzahl an mobilen Endgeräten ist möglich, wobei die Personenanzahl mit der Endgeräteanzahl nicht übereinstimmen muss. Alle Mitglieder der Personengruppe in der Kontrollzone 120 fotografieren sich vorzugsweise gegenseitig, wobei insbesondere dann weniger Fotos für Gruppen-Kontrolle ausreichen, wenn sich auf den einzelnen Bildern eine Mehrzahl von Personen der Gruppe befindet. Die erfassten Bilder werden an die Prozessoreinheit 106 übertragen und durch die Auswerteeinheit 108 ausgewertet, wobei aus der Vielzahl der Daten einzelne Modelle, insbesondere Gesichtsmodelle, der Personen der Gruppe erstellt werden. Diese Gesichtsdaten werden mit den in der Datenbank vorhandenen Referenzdaten verglichen. Das Vergleichsergebnis in wird an der Ausgabeeinheit 110 ausgegeben, die auf diese Weise der Gruppe den Zutritt gewährt oder einen Zutritt unterbindet. Auch im Falle einer Gruppen-Zutrittskontrolle kann eine Plausibilitätsprüfung, beispielsweise anhand der Anzahl der authentifizierten Personen, erfolgen.

Die erfindungsgemäße Anordnung 100 und das erfindungsgemäße Verfahren zeichnen sich dadurch aus, dass wenigstens eine, aber auch mehrere zu überprüfende Personen 200 an der Kontrollstation 104 bei sich ändernden Umgebungsbedingungen zuverlässig erfasst und kontrolliert werden können.

### BEZUGSZEICHENLISTE

- 100: Anordnung
- 102: Kamera (Kontrollstation)
- 104: Kontrollstation
- 106: Prozessoreinheit
- 108: Auswerteeinheit
- 110: Ausgabeeinheit
- 112: mobiles Endgerät (Smartphone)
- 114: zweites mobiles Endgerät (Smartphone)
- 116: Kamera (mobiles Endgerät)
- 118: Kamera (zweites mobiles Endgerät)
- 120: Kontrollzone
- 200: zu überprüfende Person
- 202: weitere Person

## Patentansprüche

1. Anordnung (100) zur optischen Erfassung einer zu überprüfenden Person (200) an einer Kontrollstation (104),
mit einer der Kontrollstation (104) zugeordneten Kamera (102),
mit einer der Kontrollstation (104) zugeordneten Prozessoreinheit (106), die ausgebildet ist, mit der der Kontrollstation (104) zugeordneten Kamera (102) über eine Kommunikationsverbindung zu kommunizieren, wobei die Prozessoreinheit (106) eine Auswerteeinheit (108) aufweist, welche ausgebildet ist, Daten, die mittels der der Kontrollstation (104) zugeordneten Kamera (102) von der zu überprüfenden Person (200) erfasst werden, weiterzuverarbeiten und anschließend ein sich daraus ergebendes Verarbeitungsergebnis an eine Ausgabeeinheit (110) zu übermitteln, welche hierzu ausgebildet ist, mit der Prozessoreinheit (106) ebenfalls über eine Kommunikationsverbindung zu kommunizieren,
**dadurch gekennzeichnet, dass**
die Prozessoreinheit (106) ausgebildet ist, eine Kommunikationsverbindung mit einem mobilen Endgerät (112) aufzubauen und Daten, die von einer Kamera (116) des mobilen Endgeräts (112) von der zu überprüfenden Person (200) erfasst werden, der Auswerteeinheit (108) zuzuführen, die ausgebildet ist, auch die von der Kamera (116) des mobilen Endgeräts (112) erfassten Daten in die Weiterverarbeitung und damit in das Verarbeitungsergebnis einzubeziehen, bevor es an die Ausgabeeinheit (110) übermittelt und von der Ausgabeeinheit (110) ausgegeben wird.

2. Anordnung (100) nach Anspruch 1, **dadurch gekennzeichnet, dass** die Prozessoreinheit (106) ausgebildet ist, eine Kommunikationsverbindung mit wenigstens einem zweiten mobilen Endgerät (114) aufzubauen und Daten, die von einer Kamera (118) des zweiten mobilen Endgeräts (114) von der zu überprüfenden Person (200) erfasst werden, der Auswerteeinheit (108) zuzuführen, die ausgebildet ist, auch die von der Kamera (118) des zweiten mobilen Endgeräts (114) erfassten Daten in die Weiterverarbeitung und damit in das Verarbeitungsergebnis einzubeziehen, bevor es an die Ausgabeeinheit (110) übermittelt und von der Ausgabeeinheit (110) ausgegeben wird.

3. Anordnung (100) nach Anspruch 1 oder 2, **dadurch gekennzeichnet,**
**dass** das mobile Endgerät (112, 114) wenigstens einen Sensor zur Lagebestimmung der Kamera (116, 118) umfasst, und dass die Prozessoreinheit (106) ausgebildet ist, auch die Daten der Lage der Kamera (116, 118) der Auswerteeinheit (108) zuzuführen, welche ihrerseits ausgebildet ist, die Lage der Kamera (116, 118) in die Weiterverarbeitung und damit in das Verarbeitungsergebnis einzubeziehen, bevor es an die Ausgabeeinheit (110) übermittelt und von der Ausgabeeinheit (110) ausgegeben wird.

4. Anordnung (100) nach einem der Ansprüche 1 bis 3, **dadurch gekennzeichnet, dass** das mobile Endgerät (112, 114) wenigstens einen Fingerabdrucksensor zur Erfassung wenigstens eines der Fingerabdrücke der zu überprüfenden Person (200) umfasst, und dass die Prozessoreinheit (106) ausgebildet ist, auch die Fingerabdruckdaten der Auswerteeinheit (108) zuzuführen, welche ihrerseits ausgebildet ist, die Fingerabdrücke der zu überprüfenden Person (200) in die Weiterverarbeitung und damit in das Verarbeitungsergebnis einzubeziehen, bevor es an die Ausgabeeinheit (110) übermittelt und von der Ausgabeeinheit (110) ausgegeben wird.

5. Anordnung (100) nach einem der Ansprüche 1 bis 4, **dadurch gekennzeichnet, dass** die Prozessoreinheit (106) über Zugriff auf einen eine Datenbank umfassenden Speicher verfügt, und dass die Auswerteeinheit (108) ausgebildet ist, die erfassten Daten mit in der Datenbank gespeicherten Referenzdaten zu vergleichen und das Vergleichsergebnis als Verarbeitungsergebnis an die Ausgabeeinheit (110) zu übermitteln.

6. Verfahren zur optischen Erfassung einer zu überprüfenden Person (200) an einer Kontrollstation (104) mit einer Anordnung (100) nach einem der Ansprüche 1 bis 5, umfassend die folgenden Schritte:
- Optisches Erfassen der zu überprüfenden Person (200) mittels einer der Kontrollstation (104) zugeordneten, insbesondere fest installierten, Kamera (102),
- Optisches Erfassen der zu überprüfenden Person (200) mittels einer Kamera (116) eines mobilen Endgeräts (112),
- Übertragen der Daten, die mittels der der Kontrollstation (104) zugeordneten Kamera (102) und mittels der Kamera (116) des mobilen Endgeräts (112) erfasst wurden, an eine der Kontrollstation (104) zugeordnete Prozessoreinheit (106),
- Weiterverarbeiten der erfassten Daten durch eine Auswerteeinheit (108) der Prozessoreinheit (106) zu einem Verarbeitungsergebnis, und
- Übertragen des Verarbeitungsergebnisses an eine in Kommunikationsverbindung mit der Prozessoreinheit (106) stehende Ausgabeeinheit (110), durch welche das Verarbeitungsergebnis ausgegeben wird.

7. Verfahren nach Anspruch 6, **dadurch gekennzeichnet, dass** die zu überprüfende Person (200) zusätzlich mit einer Kamera (118) von wenigstens einem zweiten mobilen Endgerät (114) optisch erfasst wird, und dass die Daten der Kamera (118) des zweiten mobilen Endgeräts (114) ebenfalls an die Prozessoreinheit (106) übertragen, durch die Auswerteeinheit (108) weiterverarbeitet und damit im Verarbeitungsergebnis berücksichtigt werden.

8. Verfahren nach Anspruch 7, **dadurch gekennzeichnet, dass** die gegenseitige Lage der Kameras (102, 116, 118) anhand der Daten eines GPS-Sensors des mobilen Endgeräts (112, 114) bestimmt und einer Plausibilitätsprüfung unterzogen wird.

9. Verfahren nach einem der Ansprüche 6 bis 8, **dadurch gekennzeichnet, dass** die von der Prozessoreinheit (106) empfangenen Daten mittels der Auswerteeinheit (108) mit Referenzdaten verglichen werden, die in einer in einem Speicher hinterlegten Datenbank gespeichert sind, und dass das Vergleichsergebnis als Verarbeitungsergebnis an die Ausgabeeinheit (110) übermittelt wird.

10. Verfahren nach einem der Ansprüche 6 bis 9, **dadurch gekennzeichnet, dass** anhand der Daten der der Kontrollstation (104) zugeordneten Kamera (102) und der Daten der Kamera (116, 118) ein dreidimensionales Gesichtsbild der zu überprüfenden Person (200) erstellt und einer Überprüfung unterzogen wird.
